# EUROPÄISCHE PATENTSCHRIFT

(11) **EP 4 145 348 B1**
(45) Veröffentlichungstag und Bekanntmachung des Hinweises auf die Patenterteilung: **25.11.2026**
(21) Anmeldenummer: 22192884.9
(22) Anmeldetag: 30.08.2022
(51) Int. Cl.: G06K 19/077, H01Q 1/38, G06K 19/07, G09F 3/02

(54) **ETIKETT MIT RFID FUNKTION**
TAG WITH RFID FUNCTION
ÉTIQUETTE À FONCTION RFID

(30) Priorität: 07.09.2021 DE 102021123113
(43) Veröffentlichungstag der Anmeldung: 08.03.2023
(73) Patentinhaber: Schreiner Group GmbH & Co. KG, 85764 Oberschleissheim (DE)
(72) Erfinder: Bohlender, Alexander, 85469 Walpertskirchen (DE)
(74) Vertreter: Epping - Hermann - Fischer

(56) Entgegenhaltungen:
- DE-A1- 102007 037 293
- US-A1- 2005 092 845
- US-A1- 2005 093 677
- US-A1- 2008 174 434
- US-A1- 2009 309 703
- US-A1- 2012 055 988
- US-A1- 2013 293 354
- US-A1- 2017 300 801
- US-A1- 2018 040 939
- US-A1- 2018 351 257

## Beschreibung

Die Erfindung betrifft ein Etikett mit RFID Funktion, das dazu geeignet ist, auf Gefäßen mit einem Material aus Kunststoff und kleiner Oberfläche, insbesondere auf einem Behältnis des medizinischen Bedarfs, angeordnet zu werden.

RFID-Etiketten ermöglichen die elektronische Speicherung und drahtlose Übermittlung von Informationen von Produkten, auf denen die Etiketten aufgeklebt sind. Ein RFID-Etikett weist üblicherweise ein sogenanntes RFID-Inlay auf, das einen RFID-Chip (Mikrochip) und eine Antennenstruktur, die an den RFID-Chip angeschlossen ist, umfasst. Die am Markt befindlichen RFID-Etiketten sind größtenteils zum Aufkleben auf Glasgefäße mit verhältnismäßig großer Oberfläche ausgelegt. Dies betrifft insbesondere die Antenne eines RFID-Inlays, die oftmals eine große Länge aufweist, um eine geforderte Lese-/Schreibreichweite zu erzielen.

In US 2013/0293354, US 2005/0093677, US 2009/0309703, US 2018/0040939, US 2017/0300801, DE 10 2007 037 293 und US 2012/0055988 sind Antennen, die kapazitive Strukturen/Elemente aufweisen und für RFID-Tags verwendet werden können, gezeigt. Insbesondere beim Aufkleben von RFID-Etiketten auf kleine Gefäße aus einem Material aus Kunststoff, zum Beispiel Container aus COP (Cyclo-Olefin-Polymere), PP (Polypropylen) oder COC (Cyclo-Olefin-Copolymere), die mit einer Flüssigkeit befüllt sind, weisen die bekannten RFID-Etiketten in den meisten Fällen für typische Anwendungsfälle, zum Beispiel Waren- und Bestandsmanagement, logistische Prozesse oder Pulkerfassung, eine zu geringe Lese-/Schreibreichweite auf. Die Nutzung kleiner Gefäße in Verbindung mit einem Etikett mit RFID-Funktion, insbesondere mit einer UHF-Antennenstruktur, ist daher für viele Anwendungen, beispielsweise Anwendungen aus dem medizinischen Bereich, derzeit nicht oder nur mit großen Einschränkungen möglich.

Ein Anliegen der vorliegenden Erfindung ist es, ein Etikett mit RFID-Funktion anzugeben, das insbesondere zum Aufbringen auf flüssigkeitsgefüllte Gefäße aus einem Kunststoffmaterial mit kleiner nutzbarer Oberfläche geeignet ist.

Ein Etikett mit RFID-Funktion, das auf einem flüssigkeitsbefüllten Gefäß aus einem Material aus Kunststoff mit kleiner nutzbarerer Oberfläche verwendbar ist und mit dem sich eine große Lese- und Schreibreichweite erzielen lässt, ist im Patentanspruch 1 angegeben. Die abhängigen Ansprüche definieren bevorzugte Ausführungsbeispiele.

Ein derartiges Etikett mit RFID-Funktion umfasst eine Trägerschicht und ein RFID-Inlay mit einem RFID-Chip und einer Antenne. Die Antenne ist an dem RFID-Chip angeschlossen. Das RFID-Inlay ist auf der Trägerschicht angeordnet. Die Antenne weist mindestens ein kapazitives Element auf, von dem die Resonanzfrequenz der Antenne abhängig ist.

Die Resonanzfrequenz und damit verbunden die Lese-/Schreibreichweite eines Etiketts mit RFID-Funktion wird maßgeblich durch die Geometrie und die elektrische Länge der Antenne bestimmt. Durch die Ausgestaltung der Antenne mit dem mindestens einen kapazitiven Element kann die geometrische Länge der Antenne virtuell verlängert werden. Bei dem erfindungsgemäßen Etikett kann die RFID-Antenne dadurch kompakter ausfallen als vergleichbare Antennen, bei denen die tatsächliche Länge der Antenne entsprechend groß gewählt werden muss, um die geforderte Lese-/Schreibreichweite zu erzielen.

Da die geometrische Länge der Antenne durch das Hinzufügen von mindestens einem kapazitiven Element zu der Leiterbahn der Antenne virtuell verlängert ist, kann das RFID-Inlay mit einer kleinen Antennenstruktur realisiert werden, so dass das Anbringen des Etiketts mit RFID-Funktion auf kleinen nutzbaren Oberflächen von Gefäßen möglich ist. Insbesondere kann das erfindungsgemäße Etikett mit RFID-Funktion auf kleinen Behältnissen aus dem medizinischen oder pharmazeutischen Bereich, beispielsweise auf Vials oder Spritzen, angeordnet werden. Besonders hervorzuheben ist dabei die Eignung für kleine Behälter, die mit Flüssigkeiten, zum Beispiel Wasser, wässrigen Lösungen, Kochsalzlösungen, Ölen, Emulsionen etc., gefüllt sind.

Indem die elektrische Länge der Antenne durch das Hinzufügen von mindestens einem kapazitiven Strukturelement zu der restlichen Leiterbahn der Antenne im Vergleich zu der geometrischen Länge der Leiterbahn der Antenne virtuell verlängert wird, ist das erfindungsgemäße RFID-Etikett insbesondere auch zum Anbringen auf Gefäßen geeignet, deren Material aus Kunststoff, insbesondere aus COP, PP oder COC oder Kombinationen davon besteht.

Gemäß einer möglichen Ausführungsform kann das mindestens eine kapazitive Element die Form einer Interdigitalstruktur haben. Das mindestens eine kapazitive Element kann beispielsweise als ein Interdigitalkondensator ausgebildet sein. Die Interdigitalstruktur eines derartigen Kondensators kann bei dem erfindungsgemäßen Etikett gezielt im Hinblick auf die Anwendung auf flüssigkeitsgefüllten COC/COP-Gefäßen mit kleinen nutzbaren Oberflächen optimiert werden.

Das mindestens eine kapazitive Element kann je nach Anforderung verschiedene Geometrien, zum Beispiel leitfähige Schichten aus einer oder mehreren geraden, gezackten oder gewellten Linien, die in Form von Interdigitalstrukturen auf der Trägerschicht angeordnet sind, aufweisen. Die Schichten aus dem leitfähigen Material können auf die Trägerschicht gedruckt oder durch einen Ätzprozess aufgebracht werden. Gemäß einer weiteren Ausführungsform kann das mindestens eine kapazitive Element aus einer Schichtenfolge aus mehreren Schichten leitfähigen und isolierenden Materials auf die Trägerschicht kaschiert werden. Darüber hinaus ist die Verwendung von diskreten Bauteilen, zum Beispiel SMD-Kondensatoren, für das mindestens eine kapazitive Element möglich. Zur virtuellen Verlängerung der Antenne kann ein diskretes Bauteil an die Leiterbahn der Antenne angeschlossen werden.

Ausführungsformen des Etiketts mit RFID-Funktion als auch mögliche Gefäße zum Aufbringen des erfindungsgemäßen Etiketts werden im Folgenden anhand von Figuren näher erläutert.

Es zeigen:
Figur 1 einen Querschnitt durch eine Ausführungsform eines Etiketts mit RFID-Funktion,
Figur 2 eine Ausführungsform einer Antenne für ein RFID-Inlay mit einem kapazitiven Element zur virtuellen Verlängerung der geometrischen Länge der Antenne,
Figur 3A ein Ersatzschaltbild einer Dipolantenne ohne kapazitive Elemente,
Figur 3B ein Ersatzschaltbild einer Dipolantenne mit kapazitiven Elementen zur virtuellen Verlängerung der geometrischen Länge einer Antenne,
Figur 4A eine Ausführungsform eines kapazitiven Elements als Interdigitalkondensator zur virtuellen Verlängerung der geometrischen Länge einer Antenne eines RFID-Inlays,
Figur 4B eine Ausführungsform eines kapazitiven Elements aus mehreren übereinander angeordneten leitfähigen und elektrisch isolierenden Schichten zur virtuellen Verlängerung der geometrischen Länge einer Antenne eines RFID-Inlays,
Figur 5A ein mit einem Etikett mit RFID-Funktion etikettiertes Gefäß in einer Ausführungsform als Spritze, und
Figur 5B ein mit einem Etikett mit RFID-Funktion etikettiertes Gefäß in einer Ausführungsform als Vial.

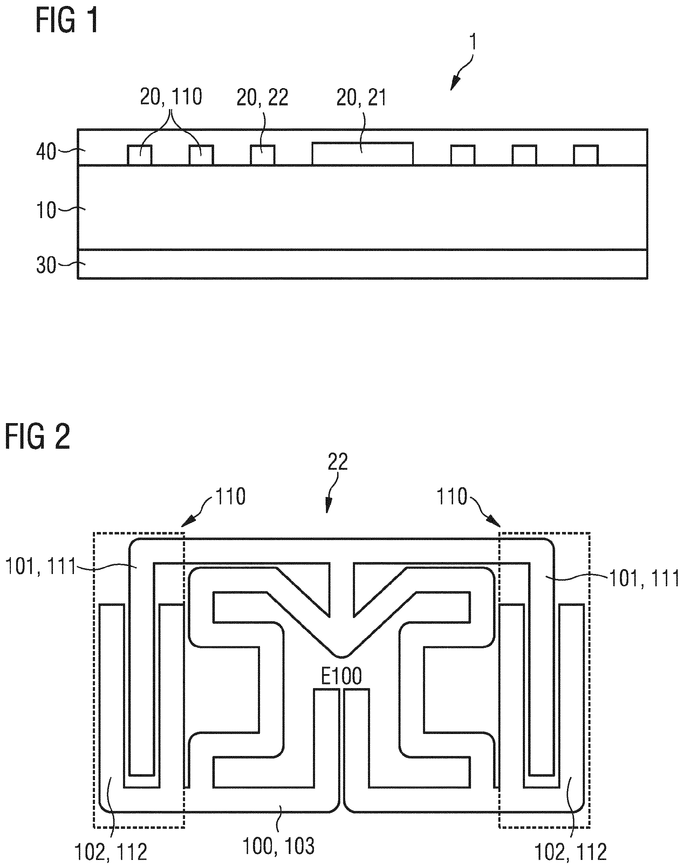

Figur 1 zeigt einen Querschnitt durch ein Etikett 1 mit RFID-Funktion mit einer Trägerschicht 10 und einem RFID-Inlay 20, das auf der Trägerschicht 10 angeordnet ist. Das RFID-Inlay 20 umfasst einen RFID-Chip 21 und eine Antenne 22, die an den RFID-Chip 21 angeschlossen ist. Die Antenne 22 kann insbesondere als eine UHF Antenne ausgebildet sein. Das Etikett 1 kann beispielsweise mittels einer Klebeschicht 30, die auf einer Unterseite der Trägerschicht 10 angeordnet ist, auf einen Gegenstand aufgeklebt werden. Auf der Oberseite der Trägerschicht 10, auf der das RFID-Inlay 20 angeordnet ist, kann optional eine Schutzschicht 40 zum Schutz des RFID-Inlays 20 vorhanden sein.

Die Antenne 22 weist mindestens ein kapazitives Element 110 auf. Die Antenne 22 ist dadurch derart ausgebildet, dass bei dem erfindungsgemäßen Etikett die Resonanzfrequenz der Antenne und damit auch die Lese-/Schreibreichweite des RFID-Inlays 20 von dem mindestens einen kapazitiven Element 110 abhängig ist. Durch das Anschließen des mindestens einen kapazitiven Elements an eine Leiterbahn der Antenne kann somit die Lese-/Schreibreichweite des RFID-Etiketts beeinflusst und insbesondere vergrößert werden.

Figur 2 zeigt eine Draufsicht auf die Antenne 22, die auf der Oberseite der Trägerschicht 10 angeordnet ist. Die Antenne 22 umfasst eine Leiterbahn 100 und mindestens ein kapazitives Element 110. Die Leiterbahn 100 ist an einem Ende E100 an den RFID-Chip 21 und an einem entgegengesetzten Ende an das mindestens eine kapazitive Element 110 angeschlossen. Im Ausführungsbeispiel der Figur 2 sind an beiden Seiten der Leiterbahn 100 kapazitive Elemente 110 angeschlossen, so dass die Antenne 22 im gezeigten Ausführungsbeispiel zwei kapazitive Strukturen aufweist.

Das mindestens eine kapazitive Element 110 kann gemäß einem Ausführungsbeispiel, das in Figur 2 gezeigt ist, mindestens eine erste leitfähige Schicht 111 und mindestens eine zweite leitfähige Schicht 112 aufweisen. Die mindestens eine zweite leitfähige Schicht 112 ist zu der mindestens einen ersten leitfähigen Schicht 111 beabstandet angeordnet. Im Ausführungsbeispiel der Figur 2 ist die mindestens eine erste leitfähige Schicht 111 als ein erster Teilabschnitt 101 der Leiterbahn 100 der Antenne 22 ausgebildet. Die mindestens eine zweite leitfähige Schicht 112 ist als ein zweiter Teilabschnitt 102 der Leiterbahn 100 ausgebildet. Bei dem in Figur 2 gezeigten Ausführungsbeispiel greifen die leitfähigen Schichten 111 und 112 des mindestens einen kapazitiven Elements 110 fingerförmig ineinander und bilden dadurch einen Kondensator beziehungsweise eine kapazitive Struktur.

Die Leiterbahn 100 der Antenne 22 umfasst einen dritten Teilabschnitt 103, der zu Anpassungszwecken dient. Der dritte Teilabschnitt 103 der Leiterbahn 100 ist an dem Ende E100 der Leiterbahn 100 an den RFID-Chip, der in Figur 2 nicht gezeigt ist, angeschlossen. Das mindestens eine kapazitive Element 110 ist an dem zu dem Ende E100 entgegengesetzten Ende des dritten Teilabschnitts 103 der Leiterbahn 100 angeschlossen.

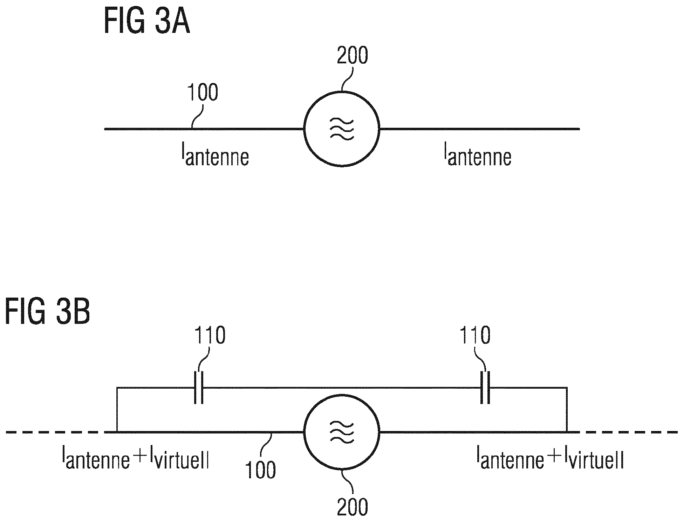

Das Prinzip der Verlängerung der Lese-/Schreibreichweite des RFID-Inlay durch das Anschließen von kapazitiven Strukturen an die Leiterbahn 100 der Antenne 22 wird im Folgenden anhand der Figuren 3A und 3B anschaulich erläutert. Figur 3A zeigt eine dazu einfache Dipolantenne mit einer Spannungsquelle 200 und einer Leiterbahn 100 einer Antenne der geometrischen Länge lₐₙₜₑₙₙₑ, die an die anregende Spannungsquelle 200 angeschlossen ist. Die Resonanzfrequenz und somit die Reichweite der Dipolantenne wird maßgeblich durch die Geometrie und insbesondere die geometrische Länge lₐₙₜₑₙₙₑ der Leiterbahn 100 der Antenne bestimmt.

Figur 3B zeigt eine modifizierte Dipolantenne mit einer Spannungsquelle 200 und einer Leiterbahn 200 mit der geometrischen Länge lₐₙₜₑₙₙₑ, zu der kapazitive Elemente 110 hinzugeschaltet sind. Im Beispiel der Figur 3B sind beispielhaft zwei kapazitive Elemente/Kondensatoren parallel zu der Leiterbahn 100 angeordnet.

Durch das Vorsehen der kapazitiven Elemente 110 ist es möglich, die elektrische Länge der Antenne im Vergleich zu der geometrischen Länge virtuell zu verlängern. Die Gesamtlänge der Antenne, die ihre Resonanzfrequenz und somit bei einem RFID-Inlay die Lese-/Schreibreichweite des RFID-Inlays bestimmt, ergibt sich aus der tatsächlich geometrischen Länge lₐₙₜₑₙₙₑ der elektrischen Leiterbahn 100 und einer virtuellen Verlängerung lᵥᵢᵣₜᵤₑₗₗ, welche durch die kapazitiven Elemente 110 erzeugt wird. Die tatsächliche, geometrische Länge lₐₙₜₑₙₙₑ der Leiterbahn 100 wird somit virtuell um die in Figur 3B strichliert eingezeichnete Länge lᵥᵢᵣₜᵤₑₗₗ verlängert.

Dies bedeutet, dass die Resonanzfrequenz der gezeigten Dipolantenne einer Dipolantenne mit einer Leiterbahn der Gesamtlänge lₐₙₜₑₙₙₑ + lᵥᵢᵣₜᵤₑₗₗ entspricht. Bei einem RFID-Inlay kann die RFID-Antenne durch das Beschalten mit mindestens einem kapazitiven Element bei gleicher Lese-/Schreibreichweite dadurch kompakter ausfallen als bei vergleichbaren Antennen ohne kapazitive Elemente, die zum Erzielen derselben Lese-/Schreibreichweite deutlich länger ausfallen müssten.

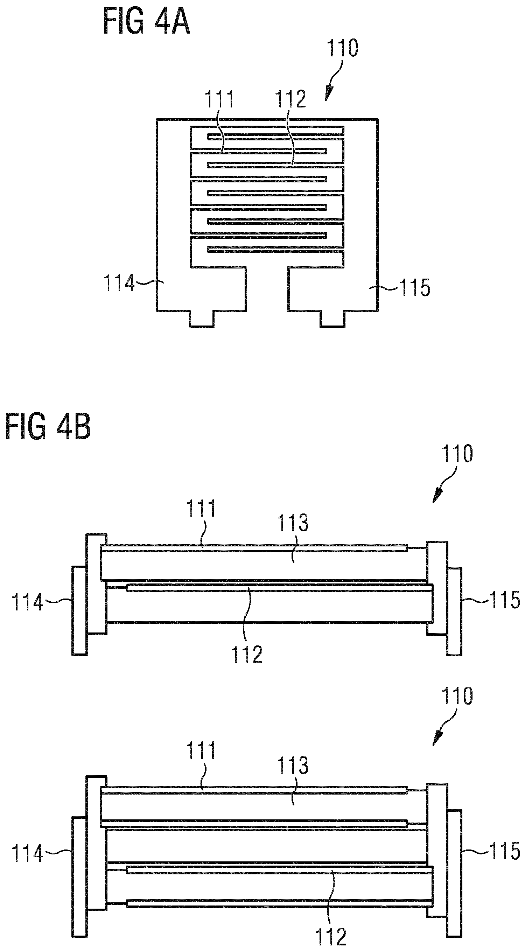

Die Figuren 4A und 4B zeigen mögliche Ausführungsformen zur Realisierung des mindestens einen kapazitiven Elements 110 zum Erzielen der virtuellen Verlängerung der Leiterbahn 100 der Antenne 22.

Bei der in Figur 4A gezeigten Ausführungsform ist das kapazitive Element 110 als ein Interdigitalkondensator ausgebildet. Das kapazitive Element 110 umfasst erste leitfähige Schichten 111 und zweite leitfähige Schichten 112, die zu den ersten leitfähigen Schichten 111 beabstandet angeordnet sind. Die leitfähigen Schichten 111 und 112 greifen fingerbeziehungsweise kammförmig ineinander. Neben den in Figur 4A gezeigten geradlinigen Verläufen der leitfähigen Schichten 111, 112 können diese Schichten auch beispielsweise als gezackte oder gewellte Linien ausgeführt sein. Die leitfähigen Schichten 111, 112 können auf die Trägerschicht 10 gedruckt oder geätzt werden.

Das kapazitive Element 110 weist ein erstes Kontaktierungselement 114, das an die ersten leitfähigen Schichten 111 angeschlossen ist, und ein zweites Kontaktierungselement 115, das an die zweiten leitfähigen Schichten 112 angeschlossen ist, auf. Ein solcher Interdigitalkondensator lässt sich als kapazitives Element in der in Figur 2 gezeigten Antennenstruktur verwenden, indem das erste und das zweite Kontaktierungselement 114, 115 an den dritten Teilabschnitt 103 der Leiterbahn 100 der Antenne 22 angeschlossen werden.

Figur 4B zeigt in einer Querschnittsansicht weitere Ausführungsformen von kapazitiven Elementen zur virtuellen Verlängerung der Leiterbahn einer RFID-Antenne.

Wie im oberen Bild der Figur 4B gezeigt ist, kann das kapazitive Element mindestens eine erste leitfähige Schicht 111 und mindestens eine zweite leitfähige Schicht 112 aufweisen. Die mindestens eine zweite leitfähige Schicht 112 ist zu der mindestens einen ersten leitfähigen Schicht 111 beabstandet angeordnet. Des Weiteren weist das kapazitive Element 110 mindestens eine elektrisch isolierende Schicht 113 auf, die zwischen der mindestens einen ersten leitfähigen Schicht 111 und der mindestens einen zweiten leitfähigen Schicht 112 angeordnet ist. Das mindestens eine kapazitive Element 110 umfasst des Weiteren ein erstes Kontaktierungselement 114 und ein zweites Kontaktierungselement 115. Das erste Kontaktierungselement 114 ist an die mindestens eine erste leitfähige Schicht 111 angeschlossen. Das zweite Kontaktierungselement 115 ist an die mindestens eine zweite leitfähige Schicht 112 angeschlossen.

Figur 4B zeigt zusätzlich zu der im oberen Bild dargestellten einfachen Ausführungsform eines kapazitiven Elements mit nur einer ersten und zweiten leitfähigen Schicht im unteren Bild eine weitere Ausführungsform eines kapazitiven Elements 110, bei der eine Vielzahl der mindestens einen ersten und zweiten leitfähigen Schicht 111, 112 und der mindestens einen elektrisch isolierenden Schicht 113 übereinander angeordnet sind.

Zur Realisierung des kapazitiven Elements nach der in Figur 4B gezeigten Ausführungsform können die leitfähigen Schichten 111, 112 und die dazwischen angeordnete isolierende Schichten 113 auf der Trägerschicht 10 übereinander kaschiert werden.

Statt auf der Trägerschicht 10 einzelne Schichten aufzubringen, kann das mindestens eine kapazitive Element gemäß einer weiteren Ausführungsform als ein diskretes Bauteil, beispielsweise als ein SMD-Kondensator, ausgebildet sein. Das diskrete Bauteil kann ebenfalls den in Figur 4B gezeigten Aufbau aus elektrisch leitfähigen und isolierenden Schichten aufweisen, die sich durch seitlich angeordnete Kontaktierungselemente mit dem dritten Teilabschnitt 103 der Leiterbahn 100 der Figur 2 kontaktieren lassen, aufweisen.

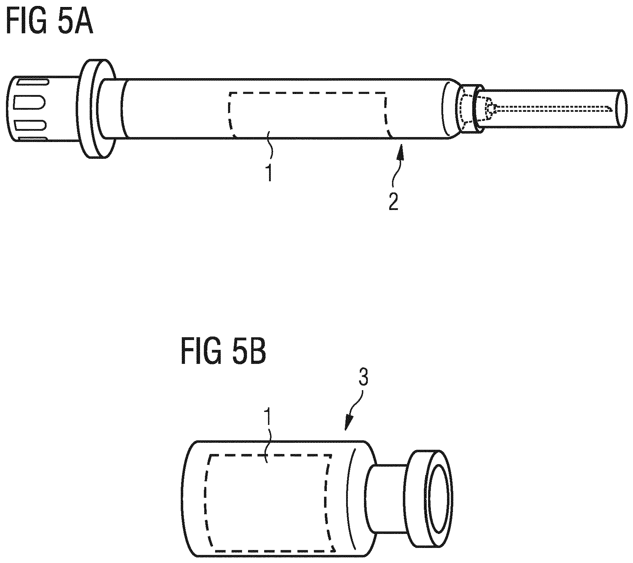

Da sich mit dem erfindungsgemäßen Etikett mit RFID-Funktion bei kurzer geometrischer Länge der Antenne 22 eine große Lese-/Schreibreichweite erzielen lässt, eignet sich das Etikett 1 zum Anbringen auf kleinen Gefäßen, insbesondere Gefäßen mit kleiner nutzbarer Oberfläche. Mögliche Gefäße zum Aufkleben des Etiketts 1 sind die in Figur 5A gezeigte Spritze, beispielsweise eine 1 ml Spritze, oder das in Figur 5B gezeigte Vial, beispielsweise ein 2r Vial.

Neben den in den Figuren 5A und 5B gezeigten Gefäßen ist das Etikett 1 mit RFID-Funktion insbesondere zum Anordnen auf flüssigkeitsgefüllten Gefäßen, beispielsweise auf Behältnissen, die mit Wasser, wässrigen Lösungen, Kochsalzlösungen, Ölen, Emulsionen, etc., gefüllt sind, geeignet. Darüber hinaus eignet sich das Etikett 1 mit RFID-Funktion insbesondere zum Anbringen auf Gefäßen aus einem Material aus Kunststoff, insbesondere aus COC oder PP oder COP oder Kombinationen davon.

Beim Einsatz des Etiketts mit RFID-Funktion auf Gefäßen mit pharmazeutischem Inhalt ermöglicht die Verwendung des RFID-Etiketts insbesondere ein reibungsloses und fehlerfreies Medikamentenmanagement, das beispielsweise in Krankenhäusern oder Apotheken einen Überwachung des Inventars ermöglicht, die Verfügbarkeit sicherstellt und somit dazu beiträgt die Anforderungen an die Patientensicherheit zu gewährleisten.

### Bezugszeichenliste

- 1: Etikett mit RFID-Funktion
- 2: Spritze
- 3: Vial
- 10: Trägerschicht
- 20: RFID-Inlay
- 21: RFID-Chip
- 22: Antenne
- 30: Klebeschicht
- 40: Schutzschicht
- 100: Leiterbahn
- 101, 102, 103: Teilabschnitte der Leiterbahn
- 110: kapazitives Element
- 111: erste leitfähige Schicht
- 112: zweite leitfähige Schicht
- 113: elektrisch isolierende Schicht
- 114, 115: Kontaktierungselement

## Patentansprüche

1. Etikett mit RFID Funktion, umfassend:
- eine Trägerschicht (10),
- ein RFID-Inlay (20) mit einem RFID-Chip (21) und einer Antenne (22), die an den RFID-Chip (21) angeschlossen ist,
- wobei das RFID-Inlay (20) auf der Trägerschicht (10) angeordnet ist,
- wobei die Antenne (22) mindestens ein kapazitives Element (110), von dem die Resonanzfrequenz der Antenne (22) abhängig ist, aufweist,
- wobei das mindestens eine kapazitive Element (110) mindestens eine erste leitfähige Schicht (111) und mindestens eine zweite leitfähige Schicht (112), die zu der mindestens einen ersten leitfähigen Schicht (111) beabstandet angeordnet ist, aufweist,
- wobei die Antenne (22) eine Leiterbahn (100) mit zwei Enden (E100), die an den RFID-Chip (21) angeschlossen sind, aufweist,
- wobei die mindestens eine erste leitfähige Schicht (111) als ein erster Teilabschnitt (101) der Leiterbahn (100) und die mindestens eine zweite leitfähige Schicht (112) als ein zweiter Teilabschnitt (102) der Leiterbahn (100) ausgebildet sind,
- wobei die Leiterbahn (100) einen dritten Teilabschnitt (103), der zwischen den zwei Enden (E100) der Leiterbahn (100) angeordnet ist und die zwei Enden (E100) unmittelbar elektrisch leitend miteinander verbindet, umfasst,
- wobei das mindestens eine kapazitive Element (110) an den dritten Teilabschnitt (103) der Leiterbahn (100) angeschlossen ist,
**dadurch gekennzeichnet, dass** der erste Teilabschnitt (101) der Leiterbahn (100) und der zweite Teilabschnitt (102) der Leiterbahn (100) an unterschiedliche Positionen des dritten Teilabschnitts (103) der Leiterbahn (100) angeschlossen sind.

2. Etikett nach Anspruch 1,
wobei das mindestens eine kapazitive Element (110) mindestens eine elektrisch isolierende Schicht (113), die zwischen der mindestens einen ersten leitfähigen Schicht (111) und der mindestens einen zweiten leitfähigen Schicht (112) angeordnet ist, aufweist.

3. Etikett nach einem der Ansprüche 1 oder 2,
- wobei das mindestens eine kapazitive Element (110) ein erstes Kontaktierungselement (114) und ein zweites Kontaktierungselement (115) aufweist,
- wobei das erste Kontaktierungselement (114) an die mindestens eine erste leitfähige Schicht (111) und das zweite Kontaktierungselement (115) an die mindestens eine zweite leitfähige Schicht (112) angeschlossen ist.

4. Etikett nach einem der Ansprüche 2 oder 3,
wobei das mindestens eine kapazitive Element (110) eine Vielzahl der mindestens einen ersten und zweiten leitfähigen Schicht (111, 112) und der mindestens einen elektrisch isolierenden Schicht (113), die nebeneinander angeordnet sind, aufweist.

5. Etikett nach einem der Ansprüche 1 bis 4,
wobei das mindestens eine kapazitive Element (110) als ein Interdigitalkondensator ausgebildet ist.

6. Etikett nach einem der Ansprüche 1 bis 5,
wobei die Antenne (22) als ein UHF Antenne ausgebildet ist.

7. Etikettiertes Gefäß mit RFID-Funktionalität zur Aufnahme einer Flüssigkeit, umfassend: ein Etikett (1) mit RFID-Funktion nach einem der Ansprüche 1 bis 6, das auf einer Oberfläche des Gefäßes (2, 3) angeordnet ist.

8. Etikettiertes Gefäß nach Anspruch 7,
wobei das Gefäß (2, 3) ein Material aus Kunststoff aufweist.

9. Etikettiertes Gefäß nach einem der Ansprüche 7 oder 8,
wobei das Gefäß (2, 3) als eine Phiole (2) oder eine Spritze (3) ausgebildet ist.

## Claims

1. A label with RFID functionality, comprising:
- a carrier layer (10),
- an RFID inlay (20) comprising an RFID chip (21) and an antenna (22) connected to the RFID chip (21),
- wherein the RFID inlay (20) is disposed on the carrier layer (10),
- wherein the antenna (22) has at least one capacitive element (110) on which the resonance frequency of the antenna (22) depends,
- wherein the at least one capacitive element (110) has at least one first conductive layer (111) and at least one second conductive layer (112) disposed apart from the at least one first conductive layer (111),
- wherein the antenna (22) has a conductor track (100) with two ends (E100) connected to the RFID chip (21),
- wherein the at least one first conductive layer (111) is formed as a first sub-section (101) of the conductor track (100) and the at least one second conductive layer (112) is formed as a second sub-section (102) of the conductor track (100),
- wherein the conductor track (100) comprises a third sub-section (103) that is disposed between the two ends (E100) of the conductor track (100) and directly conducts the two ends (E100) electrically,
- wherein the at least one capacitive element (110) is connected to the third sub-section (103) of the conductor track (100),
**characterized in that** the first sub-section (101) of the conductor track (100) and the second sub-section (102) of the conductor track (100) are connected to different positions of the third sub-section (103) of the conductor track (100).

2. The label according to claim 1,
wherein the at least one capacitive element (110) has at least one electrically insulating layer (113) disposed between the at least one first conductive layer (111) and the at least one second conductive layer (112).

3. The label according to any one of claims 1 or 2,
- wherein the at least one capacitive element (110) has a first contact element (114) and a second contact element (115),
- wherein the first contact element (114) is connected to the at least one first conductive layer (111) and the second contact element (115) is connected to the at least one second conductive layer (112).

4. The label according to any one of claims 2 or 3,
wherein the at least one capacitive element (110) has a plurality of the at least one first and second conductive layers (111, 112) and the at least one electrically insulating layer (113), which are disposed side by side.

5. The label according to any one of claims 1 to 4,
wherein the at least one capacitive element (110) is configured as an interdigital capacitor.

6. The label according to any one of claims 1 to 5,
wherein the antenna (22) is configured as a UHF antenna.

7. A labeled container with RFID functionality for holding a liquid, comprising:
a label (1) with RFID functionality according to any one of claims 1 to 6, which is disposed on a surface of the container (2, 3).

8. The labeled container according to claim 7,
wherein the container (2, 3) has a plastic material.

9. The labeled container according to any one of claims 7 or 8,
wherein the container (2, 3) is configured as a vial (2) or a syringe (3).

## Revendications

1. Une étiquette dotée d'une fonction RFID, comprenant:
- une couche de support (10),
- un insert RFID (20) comportant une puce RFID (21) et une antenne (22) reliée à la puce RFID (21),
- sachant que l'insert RFID (20) est disposé sur la couche de support (10),
- sachant que l'antenne (22) comporte au moins un élément capacitif (110) dont dépend la fréquence de résonance de l'antenne (22),
- sachant que ledit au moins un élément capacitif (110) comporte au moins une première couche conductrice (111) et au moins une deuxième couche conductrice (112), disposée à distance de ladite au moins une première couche conductrice (111),
- sachant que l'antenne (22) comporte une piste conductrice (100) dotée de deux extrémités (E100) qui sont raccordées à la puce RFID (21),
- sachant que l'au moins une première couche conductrice (111) est réalisée sous la forme d'un premier tronçon (101) de la piste conductrice (100) et l' au moins une deuxième couche conductrice (112) est réalisée sous la forme d'un deuxième tronçon (102) de la piste conductrice (100),
- sachant que la piste conductrice (100) comprend un troisième tronçon (103) qui est disposé entre les deux extrémités (E100) de la piste conductrice (100) et qui relie les deux extrémités (E100) entre elles de manière électriquement conductrice,
- sachant que l'au moins un élément capacitif (110) est raccordé au troisième tronçon (103) de la piste conductrice (100),
**caractérisé en ce que** le premier tronçon (101) de la piste conductrice (100) et le deuxième tronçon (102) de la piste conductrice (100) sont raccordés à des positions différentes du troisième tronçon (103) de la piste conductrice (100).

2. L'étiquette selon la revendication 1,
sachant que ledit au moins un élément capacitif (110) comporte au moins une couche électriquement isolante (113) disposée entre ladite au moins une première couche conductrice (111) et ladite au moins une deuxième couche conductrice (112).

3. L'étiquette selon l'une des revendications 1 ou 2,
- sachant que ledit au moins un élément capacitif (110) comporte un premier élément de contact (114) et un deuxième élément de contact (115),
- sachant que le premier élément de contact (114) est relié à ladite au moins une première couche conductrice (111) et le deuxième élément de contact (115) est relié à ladite au moins une deuxième couche conductrice (112).

4. L'étiquette selon l'une des revendications 2 ou 3,
sachant que ledit au moins un élément capacitif (110) comprend une pluralité de ladite au moins une première et deuxième couches conductrices (111, 112) et de ladite au moins une couche électriquement isolante (113), disposées les unes à côté des autres.

5. L'étiquette selon l'une des revendications 1 à 4,
sachant que ledit au moins un élément capacitif (110) est réalisé sous la forme d'un condensateur interdigité.

6. L'étiquette selon l'une des revendications 1 à 5,
sachant que l'antenne (22) est réalisée sous la forme d'une antenne UHF.

7. Un récipient étiqueté doté d'une fonctionnalité RFID destiné à contenir un liquide, comprenant:
une étiquette (1) dotée d'une fonction RFID selon l'une des revendications 1 à 6, qui est disposée sur une surface du récipient (2, 3).

8. Le récipient étiqueté selon la revendication 7,
sachant que le récipient (2, 3) est constitué d'un matériau plastique.

9. Le récipient étiqueté selon l'une des revendications 7 ou 8,
sachant que le récipient (2, 3) se présente sous la forme d'un flacon (2) ou d'une seringue (3).
